(19) Europäisches Patentamt
European Patent Office
Office européen des brevets

(11) **EP 4 474 237 A1**

(12) **EUROPÄISCHE PATENTANMELDUNG**

(43) Veröffentlichungstag:
**11.12.2024   Patentblatt 2024/50**

(21) Anmeldenummer: 24179853.7

(22) Anmeldetag: **04.06.2024**

(51) Internationale Patentklassifikation (IPC):
***B60W 40/105*** *(2012.01)*

(52) Gemeinsame Patentklassifikation (CPC):
**B60W 40/105;** B60W 2300/36; B60W 2520/105;
B60W 2520/125; B60W 2520/14; B60W 2520/16;
B60Y 2200/12; B60Y 2200/13

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **05.06.2023   DE 102023205207**

(71) Anmelder: **Robert Bosch GmbH
70442 Stuttgart (DE)**

(72) Erfinder:
• **Skatulla, Johann
72764 Reutlingen (DE)**
• **Gabriel, David
72141 Walddorfhaeslach (DE)**

(54) **VERFAHREN ZUM BESTIMMEN EINES GESCHWINDIGKEITSWERTS EINES EINSPURIGEN FAHRZEUGS**

(57)   Die Erfindung betrifft ein Verfahren zum Bestimmen eines Geschwindigkeitswerts eines einspurigen Fahrzeugs, insbesondere eines eBikes, wobei das Fahrzeug zumindest einen Beschleunigungssensor und einen Drehratensensor aufweist, umfassend die Schritte:
- Messen einer Beschleunigung des Fahrzeugs in zumindest drei Richtungen mittels des Beschleunigungssensors,
- Messen einer Drehrate des Fahrzeugs um zumindest zwei Drehachsen mittels des Drehratensensors,
- Ermitteln einer Fahrsituation des Fahrzeugs anhand der gemessenen Beschleunigungen und Drehraten des Fahrzeugs, und
- Bestimmen des Geschwindigkeitswerts des Fahrzeugs anhand eines die Kinematik des Fahrzeugs beschreibenden Gleichungssystems, der ermittelten Fahrsituation sowie der gemessenen Beschleunigungen und Drehraten des Fahrzeugs.

Fig. 4

EP 4 474 237 A1

**Beschreibung**

Die Erfindung betrifft ein Verfahren zum Bestimmen eines Geschwindigkeitswerts eines einspurigen Fahrzeugs, insbesondere eines eBikes, wobei das Fahrzeug zumindest einen Beschleunigungssensor und einen Drehratensensor aufweist.

Die Erfindung betrifft weiter ein Verfahren zum Plausibilisieren eines Geschwindigkeitswerts eines einspurigen Fahrzeugs, insbesondere eines eBikes.

Darüber hinaus betrifft die Erfindung ein einspuriges Fahrzeug, insbesondere ein eBike, umfassend zumindest einen Beschleunigungssensor und einen Drehratensensor.

Obwohl allgemein auf einspurige Fahrzeuge anwendbar, wird die folgende Erfindung anhand von eBikes erläutert.

Stand der Technik

Es ist bei eBikes bekannt geworden, zur Geschwindigkeitsmessung einen pulsbasierten Sensor, kurz Pulssensor, am Hinterrad einzusetzen. Dieser liefert einen Puls pro Radumdrehung auf dessen Basis mittels des Radumfangs eine Geschwindigkeit berechnet werden kann. Dieses Signal wird in bisher bekannter Weise unter anderem dazu eingesetzt, die Fahrer-Unterstützung ab einer gewissen Geschwindigkeit abzuregeln, um so beispielsweise gesetzliche Vorgaben zu erfüllen. Bei einem defekten oder gestörten Sensor, muss die fehlerhaft bestimmte Geschwindigkeit mithilfe eines anderen Sensors erkannt und/oder korrigiert werden.

Offenbarung der Erfindung

In einer Ausführungsform stellt die vorliegende Erfindung ein Verfahren zum Bestimmen eines Geschwindigkeitswerts eines einspurigen Fahrzeugs bereit, insbesondere eines eBikes, wobei das Fahrzeug zumindest einen Beschleunigungssensor und einen Drehratensensor aufweist, umfassend die Schritte:

- Messen einer Beschleunigung des Fahrzeugs in zumindest drei Richtungen mittels des Beschleunigungssensors,
- Messen einer Drehrate des Fahrzeugs um zumindest zwei Drehachsen mittels des Drehratensensors,
- Ermitteln einer Fahrsituation des Fahrzeugs anhand der gemessenen Beschleunigungen und Drehraten des Fahrzeugs, und
- Bestimmen des Geschwindigkeitswerts des Fahrzeugs anhand eines die Kinematik des Fahrzeugs beschreibenden Gleichungssystems, der ermittelten Fahrsituation sowie der gemessenen Beschleunigungen und Drehraten des Fahrzeugs.

In einer Ausführungsform stellt die vorliegende Erfindung ein Verfahren zum Plausibilisieren eines Geschwindigkeitswerts eines einspurigen Fahrzeugs bereit, insbesondere eines eBikes, umfassend die Schritte:

- Bestimmen eines Geschwindigkeitswerts des Fahrzeugs anhand eines Verfahrens gemäß einem der Ansprüche 1-7,
- Ermitteln eines weiteren Geschwindigkeitswerts des Fahrzeugs anhand eines weiteren Geschwindigkeitssensors, und
- Plausibilisieren des weiteren Geschwindigkeitswerts anhand eines Vergleichs des bestimmten Geschwindigkeitswerts und des ermittelten weiteren Geschwindigkeitswerts.

In einer Ausführungsform stellt die vorliegende Erfindung ein einspuriges Fahrzeug bereit, insbesondere ein eBike, umfassend zumindest einen Beschleunigungssensor und einen Drehratensensor, sowie:

- eine Messeinheit, ausgebildet zum Messen einer Beschleunigung des Fahrzeugs in zumindest drei Richtungen mittels des Beschleunigungssensors sowie zum Messen einer Drehrate des Fahrzeugs um zumindest zwei Drehachsen mittels des Drehratensensors,
- eine Ermittlungseinheit, ausgebildet zum Ermitteln einer Fahrsituation des Fahrzeugs anhand der gemessenen Beschleunigungen und Drehraten des Fahrzeugs, und
- eine Bestimmungseinheit, ausgebildet zum Bestimmen eines Geschwindigkeitswerts des Fahrzeugs anhand eines die Kinematik des Fahrzeugs beschreibenden Gleichungssystems, der ermittelten Fahrsituation sowie der gemessenen Beschleunigungen und Drehraten des Fahrzeugs.

Mit anderen Worten werden in einer Ausführungsform zunächst die Beschleunigungen des Fahrzeugs in zumindest drei Richtungen, sowie die Drehraten des Fahrzeugs um zumindest zwei Drehachsen gemessen. Ausgehend von den ermittelten Beschleunigungen und Drehraten kann eine aktuelle Fahrsituation erkannt werden, beispielsweise eine Kurvenfahrt. Bei einer geeigneten Fahrsituation kann ein Gleichungssystem aufgestellt und gelöst werden, sodass die Geschwindigkeit des Fahrzeugs abhängig von den Beschleunigungen und Drehraten berechnet werden kann.

Der Begriff "Geschwindigkeitswert" ist im weitesten Sinne zu verstehen und bezieht sich in der Beschreibung, vorzugsweise in den Ansprüchen, auf einen Betrag einer Geschwindigkeit. Insbesondere wird beim Bestimmen einer Geschwindigkeit der Geschwindigkeitswert bestimmt.

Der Ausdruck "Messen einer Beschleunigung des Fahrzeugs in zumindest drei Richtungen" ist im weitesten Sinne zu verstehen und bezieht sich in der Beschreibung, vorzugsweise in den Ansprüchen, auf das Bestimmen einer Beschleunigung des Fahrzeugs in unterschiedliche Richtungen. Insbesondere wird die Beschleunigung des Fahrzeugs in drei Richtungen gemessen, wobei die drei Richtungen vorzugsweise senkrecht zueinander sind.

Einer der damit erzielten Vorteile ist, dass die Geschwindigkeit beziehungsweise der Geschwindigkeitswert des Fahrzeugs mittels eines alternativen Sensors erkannt werden kann. Ein weiterer Vorteil ist, dass die Geschwindigkeit beziehungsweise der Geschwindigkeitswert mittels eines kostengünstigen Beschleunigungssensors bestimmt werden kann. Darüber hinaus ist ein Vorteil, dass die von dem weiteren Geschwindigkeitssensor ermittelten Geschwindigkeitswerte plausibilisiert werden können, sodass fehlerhafte Geschwindigkeitssignale erkannt werden können.

Weitere Merkmale, Vorteile und weitere Ausführungsformen der Erfindung sind im Folgenden beschrieben oder werden dadurch offenbar.

Gemäß einer vorteilhaften Weiterbildung der Erfindung ist die Fahrsituation des Fahrzeugs eine in Fahrtrichtung beschleunigte Geradeausfahrt, eine in Fahrtrichtung unbeschleunigte Geradeausfahrt, eine in Fahrtrichtung beschleunigte Kurvenfahrt, eine in Fahrtrichtung unbeschleunigte Kurvenfahrt oder ein Stillstand. Die Fahrsituation kann abhängig von den gemessenen Beschleunigungen und Drehraten bestimmt werden. Je nach Fahrsituation kann der Geschwindigkeitswerts des Fahrzeugs anhand des Gleichungssystems bestimmt werden. Beispielsweise kann bei einer Kurvenfahrt der Geschwindigkeitswert berechnet werden, im Stillstand jedoch nicht. Ein Vorteil hiervon ist, dass bei ermittelter Fahrsituation entschieden werden kann, ob die Geschwindigkeit bestimmt wird oder nicht. Ein weiterer Vorteil ist, dass der Geschwindigkeitswert einfacher berechnet werden kann, da in manchen Fahrsituationen - beispielsweise bei Kurvenfahrten ohne Beschleunigung in Fahrtrichtung - die Berechnung der Geschwindigkeit vereinfacht wird.

Gemäß einer vorteilhaften Weiterbildung der Erfindung wird der Geschwindigkeitswert lediglich während einer Kurvenfahrt bestimmt. Während einer Kurvenfahrt sind die Drehraten des Fahrzeugs für gewöhnlich ungleich null. In diesem Fall kann die Geschwindigkeit besonders präzise bestimmt werden. Ein Vorteil hiervon ist, dass der Geschwindigkeitswert lediglich dann bestimmt wird, wenn eine genaue Bestimmung des Geschwindigkeitswerts erfolgen kann.

Gemäß einer vorteilhaften Weiterbildung der Erfindung sind die zumindest drei Richtungen eine Fahrtrichtung, eine Querrichtung und/oder eine Hochrichtung des Fahrzeugs. Die Fahrtrichtung kann insbesondere parallel zu einer Geraden durch die Mittelpunkte von Rädern des Fahrzeugs sein. Die Hochrichtung kann insbesondere parallel zu einer Geraden sein, die senkrecht zur Fahrtrichtung steht und durch einen Sattel des Fahrzeugs führt. Insbesondere kann die Hochrichtung parallel zu einer Senkrechten eines Untergrunds sein, über den das Fahrzeug fährt.

Die Querrichtung kann insbesondere parallel zu einer Geraden sein, die senkrecht zur Fahrtrichtung und zur Hochrichtung steht. Beispielsweise kann der Beschleunigungssensor an einem Rahmen des Fahrzeugs angeordnet sein, sodass der Beschleunigungssensor die Beschleunigungen in Fahrt-, Hoch- und Querrichtung direkt messen kann. Ein Vorteil hiervon ist, dass die ermittelten Beschleunigungen direkt zur Bestimmung der Geschwindigkeiten genutzt werden können, ohne dass diese in ein anderes Koordinatensystem gedreht werden müssen.

Gemäß einer vorteilhaften Weiterbildung der Erfindung sind die zumindest zwei Drehachsen Achsen parallel zu der Querrichtung und/oder entlang der Hochrichtung des Fahrzeugs. Ein Vorteil hiervon ist, dass der Geschwindigkeitswert auf einfache Weise berechnet werden kann, da der Geschwindigkeitswert des Fahrzeugs von den Drehraten um diese Achsen abhängig ist.

Gemäß einer vorteilhaften Weiterbildung der Erfindung basiert das Gleichungssystem auf der Geschwindigkeit des Fahrzeugs in Abrollrichtung und einer Beschleunigung des Fahrzeugs in Abrollrichtung. Wenn das Gleichungssystem abhängig von der Geschwindigkeit und der Beschleunigung des Fahrzeugs in Abrollrichtung ist, insbesondere wenn diese Größen beziehungsweise Werte ungleich null sind, kann die Geschwindigkeit nicht über das Lösen eines linearen Gleichungssystems bestimmt werden. Es ist in diesem Fall jedoch möglich, die Geschwindigkeit durch das Lösen einer Differentialgleichung zu bestimmen, die sowohl die Beschleunigung als auch die Geschwindigkeit des Fahrzeugs umfasst. Ein Vorteil hiervon ist, dass die Geschwindigkeit des Fahrzeugs in mehreren Fahrsituationen bestimmt werden kann.

Gemäß einer vorteilhaften Weiterbildung der Erfindung basiert das Gleichungssystem auf den gemessenen Beschleunigungen und Drehraten, einem Nickwinkel und einem Gierwinkel. Ein Vorteil hiervon ist, dass die Geschwindigkeit genauer bestimmt werden kann.

Gemäß einer vorteilhaften Weiterbildung der Erfindung wird das Plausibilisieren des weiteren Geschwindigkeitswerts anhand eines Zuverlässigkeitsindikators des ermittelten Geschwindigkeitswerts durchgeführt. Je nach Fahrsituation kann die mittels der Beschleunigungen und Drehraten bestimmte Geschwindigkeit unterschiedlich genau sein. Dementsprechend könnte eine mittels des weiteren Geschwindigkeitssensors ermittelte Geschwindigkeit selbst dann korrekt sein, wenn der Unterschied zwischen der ermittelten und der bestimmten Geschwindigkeit groß ist. Der Zuverlässigkeitsindikator kann aussagen, wie genau in der aktuellen Fahrsituation die mittels der Beschleunigung und Drehraten ermittelte Geschwindigkeit ist und ob diese zur Plausibilisierung des weiteren Geschwindigkeitswerts herangezogen werden sollte. Ein Vorteil hiervon ist, dass unplausible Geschwindigkeitswerte besser erkannt und verworfen werden können.

Gemäß einer vorteilhaften Weiterbildung der Erfindung basiert der Zuverlässigkeitsindikator auf einem Kalmanfilter, einer Sensitivitätsanalyse und/oder einem Vergleich der gemessenen Beschleunigungen und Drehraten mit einem Grenzwert. Beispielsweise können mit einer Sensitivitätsanalyse Grenzwerte für die gemessenen Beschleunigungen und Drehraten bestimmt werden, innerhalb derer die bestimmten Geschwindigkeitswerte als genau gelten. Es ist ebenfalls denkbar, dass die Kovarianzmatrix des Kalmanfilters direkt als Gütemaß des bestimmten Geschwindigkeitswerts herangezogen wird. Wenn diese Güte besser als ein Schwellwert ist, gilt das bestimmte Geschwindigkeitssignal als genau. Hierdurch könnte vorteilhafterweise verhindert werden, dass die mittels des weiteren Geschwindigkeitssensors ermittelten Geschwindigkeitswerte fälschlicherweise als unplausibel deklariert werden.

Gemäß einer vorteilhaften Weiterbildung der Erfindung basiert der Vergleich des bestimmten Geschwindigkeitswerts und des ermittelten weiteren Geschwindigkeitswerts auf einem Mittelwertvergleich, einem Flächengewichtvergleich und/oder einem Schwellwertvergleich mit Fehlerzähler. Zum Vergleichen der Geschwindigkeitswerte können beispielsweise beide Geschwindigkeitswerte für einen bestimmten Zeitraum gemessen werden. Anschließend werden die Mittelwerte der jeweiligen Geschwindigkeitswerte gemessen und miteinander verglichen. Es ist ebenfalls denkbar, dass die Anzahl der Zeitpunkte bestimmt wird, bei denen die Differenz zwischen den beiden Geschwindigkeitswerten größer als ein Schwellwert ist. Wenn diese Anzahl größer als ein weiterer Schwellwert ist, gilt das ermittelte Geschwindigkeitssignal als unplausibel. Weiterhin ist es möglich, dass beispielsweise anhand des Flächengewichts unplausible Geschwindigkeitswerte ermittelt werden. Dabei wird beispielsweise ein Graph der ermittelten Geschwindigkeitswerte erzeugt und die Fläche unter den Verläufen der Geschwindigkeitswerte ermittelt und verglichen. Ein Vorteil hiervon ist, dass die Geschwindigkeitswerte über einen Zeitraum verglichen werden, sodass einzelne Aussetzer bei der Bestimmung des Geschwindigkeitssignals nicht ins Gewicht fallen.

Weitere wichtige Merkmale und Vorteile der Erfindung ergeben sich aus den Unteransprüchen, aus den Zeichnungen und aus der dazugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der vorliegenden Erfindung sind in den Zeichnungen dargestellt und werden in der nachfolgenden Beschreibung näher erläutert.

Dabei zeigt in schematischer Form

Figur 1     Schritte eines Verfahrens gemäß einer Ausführungsform der vorliegenden Erfindung;

Figur 2     Schritte eines Verfahrens gemäß einer Ausführungsform der vorliegenden Erfindung,

Figur 3     einen Verlauf von Geschwindigkeitswerten gemäß einer Ausführungsform der vorliegenden Erfindung, und

Figur 4     ein Fahrzeug Geschwindigkeitswerten gemäß einer Ausführungsform der vorliegenden Erfindung.

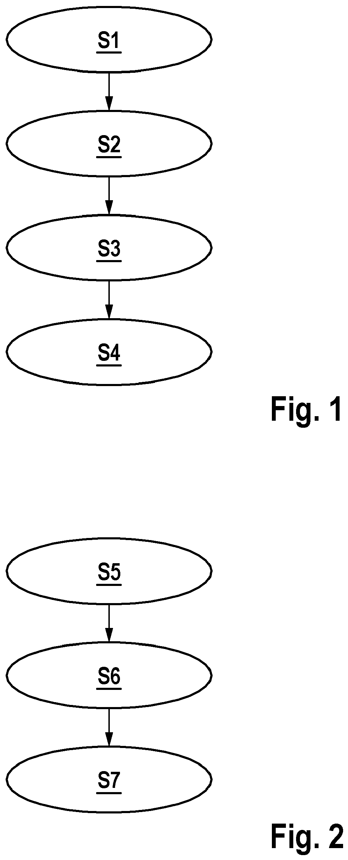

Figur 1 zeigt in schematischer Form Schritte eines Verfahrens gemäß einer Ausführungsform der vorliegenden Erfindung.

Mittels des Verfahrens gemäß Figur 1 kann die Geschwindigkeit beziehungsweise der Geschwindigkeitswert eines einspurigen Fahrzeugs bestimmt werden, wobei das Fahrzeug zumindest einen Beschleunigungssensor und einen Drehratensensor aufweist.

In einem Schritt S1 wird eine Beschleunigung des Fahrzeugs in zumindest drei Richtungen mittels des Beschleunigungssensors gemessen. Die drei Richtungen sind die Fahrt-, Hoch- und Querrichtung des Fahrzeugs. Mit anderen Worten werden die Beschleunigungen in Fahrtrichtung, senkrecht zur Fahrtrichtung und quer zur Fahrtrichtung gemessen. Bei dem Beschleunigungssensor kann es sich um eine IMU handeln. Die Orientierung des Beschleunigungssensors in Bezug auf das Fahrzeug ist bei fest verbautem Beschleunigungssensor bekannt, sodass die Richtungen konstant sind.

In einem Schritt S2 wird eine Drehrate des Fahrzeugs um zumindest zwei Drehachsen mittels des Drehratensensors gemessen. Die Drehachsen entsprechen der Fahrt-, Hoch- und Querrichtung des Fahrzeugs. Insbesondere wird die Drehrate um die Querachse und die Hochachse gemessen. Es ist ebenfalls denkbar, dass die Drehrate um alle drei Achsen gemessen wird.

In einem weiteren Schritt S3 wird eine Fahrsituation des Fahrzeugs anhand der gemessenen Beschleunigungen und Drehraten des Fahrzeugs ermittelt. Die Fahrsituation beeinflusst, ob und wie genau die Geschwindigkeit mittels des Verfahrens bestimmt werden kann. Beispielsweise kann die Geschwindigkeit bei einer Kurvenfahrt besser bestimmt werden, als bei einer Geradeausfahrt. Die Fahrsituation könnte beispielsweise eine Kurvenfahrt, eine Geradeausfahrt oder ein Stillstand sein. Insbesondere könnte die Fahrsituation anhand des Betrags der Drehraten ermittelt werden. Wenn beispielsweise eine Drehrate, insbesondere um die Hoch- oder Querachse größer als ein Schwellwert ist, kann die Geschwindigkeit ermittelt werden. Insbesondere kann gefordert werden, dass beide Drehraten um die Hoch- und die Querachse größer als jeweils ein Schwellwert sind, da bei einer üblichen Kurvenfahrt beide Drehraten größer null sind.

In einem weiteren Schritt S4 wird der Geschwindigkeitswerts des Fahrzeugs anhand eines die Kinematik des Fahrzeugs beschreibenden Gleichungssystems, der ermittelten Fahrsituation sowie der gemessenen Beschleunigungen und Drehraten des Fahrzeugs bestimmt. Insbesondere wird die Geschwindigkeit des Hinterrads des Fahrzeugs bestimmt. Dabei wird davon ausgegangen, dass es sich bei dem Hinterrad um ein nichtholonomes System handelt. Das heißt, dass beim Abrollen keine oder nur unwesentlich kleine Geschwindigkeitskomponenten senkrecht zur Laufrichtung existieren.

Das Gleichungssystem lautet:

$$\dot{V}_f - A_{bx} + g \cdot sin(\theta) = 0$$

$$V_f \cdot \omega_z - A_{by} - g \cdot sin(\varphi) \cdot cos(\theta) = 0$$

$$V_f \cdot \omega_y - A_{bz} + g \cdot cos(\varphi) \cdot cos(\theta) = 0$$

Dabei ist

$\dot{V}_f$: Beschleunigung in Abrollrichtung
$V_f$: die gesuchte Geschwindigkeit in Abrollrichtung
$A_{bx}, A_{by}, A_{bz}$: Die gemessenen Beschleunigungen in Fahrt-, Quer- und Hochrichtung
$\omega_y$, $\omega_z$: Die Drehraten um die Quer - und Hochrichtung
$\varphi$, $\theta$ : Nickwinkel und Rollwinkel des Fahrzeugs

Je nach Fahrsituation, das heißt je nach den gemessenen Beschleunigungen und Drehraten, kann der Geschwindigkeitswert unterschiedlich berechnet werden:
Wenn die Beschleunigung in Fahrtrichtung null ist und die Drehraten um Hoch- und Querachse ungleich null sind, können der Roll- und Nickwinkel direkt aus den Beschleunigungen und Drehraten bestimmt werden. Dies ist beispielsweise bei einer Geradeausfahrt der Fall.

Wenn die Beschleunigung in Fahrtrichtung null ist und eine der Drehraten ungleich null ist, kann der Geschwindigkeitswert in Fahrtrichtung direkt berechnet werden. Dies ist beispielsweise bei einer Kurvenfahrt der Fall.

Wenn die Beschleunigung in Fahrtrichtung nicht null ist und zumindest eine Drehrate ungleich null, kann eine Differentialgleichung für die Geschwindigkeit in Fahrtrichtung aufgestellt werden. Diese ist also beobachtbar, das ermöglicht den Einsatz eines Zustandsbeobachters und der Überbrückung weiterer Fahrsituationen.

Insbesondere können die beiden Fahrsituationen einer beschleunigten Geradeausfahrt und einer unbeschleunigten Geradeausfahrt überbrückt werden. In diesen Fahrsituationen kann die Geschwindigkeit in Fahrtrichtung nicht direkt berechnet werden. Einspurige Fahrzeuge können sich jedoch wie inverses Pendel verhalten und so eine instabile Fahrphysik aufweisen. Zur Korrektur dieser Instabilität werden regelmäßig kurze Kurvenfahrten benötigt, in denen die Geschwindigkeit beobachtet und somit berechnet werden kann. Somit kann auch während einer Geradeausfahrt die Geschwindigkeit bestimmt werden.

Somit kann je nach Fahrsituation der Geschwindigkeitswert des Fahrzeugs allein aus den Messwerten des Beschleunigungssensors und des Drehratensensors bestimmt werden.

Figur 2 zeigt in schematischer Form Schritte eines Verfahrens gemäß einer Ausführungsform der vorliegenden Erfindung.

Mittels des Verfahrens gemäß Figur 2 kann ein Geschwindigkeitswert eines einspurigen Fahrzeugs plausibilisiert werden.

In einem Schritt S5 wird ein Geschwindigkeitswert des Fahrzeugs anhand eines Verfahrens gemäß einem der Ansprüche 1-7 bestimmt. Die Bestimmung des Geschwindigkeitswert erfolgt insbesondere anhand der Schritte S1 bis S4 gemäß Figur 1.

In einem weiteren Schritt S6 wird ein weiterer Geschwindigkeitswert des Fahrzeugs anhand eines weiteren Geschwindigkeitssensors ermittelt. Der weitere Geschwindigkeitssensor kann beispielsweise ein pulsbasierter Geschwindigkeitssensor, insbesondere ein Reed-Sensor, sein. Aufgrund von Störungen oder Fehlfunktion könnte dieser Geschwindigkeitswert falsch sein.

Deswegen wird in einem Schritt S7 dieser weitere ermittelte Geschwindigkeitswert anhand eines Vergleichs des ermittelten Geschwindigkeitswerts und des bestimmten weiteren Geschwindigkeitswerts plausibilisiert.

Es ist möglich, dass das Plausibilisieren des ermittelten weiteren Geschwindigkeitswerts lediglich dann ausgeführt wird, wenn eine geeignete Fahrsituation erkannt worden ist. Beispielsweise kann das Plausibilisieren lediglich dann durchgeführt werden, wenn eine Kurvenfahrt erkannt worden ist. Es ist ebenfalls denkbar, dass Grenzwerte für die gemessenen Beschleunigungen und Drehraten in dem Fahrzeug gespeichert sind und lediglich der ermittelte Geschwindigkeitswert plausibilisiert wird, wenn die gemessenen Beschleunigungen und Drehraten innerhalb der Grenzwerte liegen. Insbesondere kann das Plausibilisieren lediglich dann durchgeführt werden, wenn eine minimale Drehrate detektiert worden ist. Darüber hinaus kann das Plausibilisieren lediglich dann durchgeführt werden, wenn die bestimmte Geschwindigkeit sich in einem bestimmten Geschwindigkeitsbereich befindet, beispielsweise zwischen 5 km/h und 50 km/h, vorteilhafterweise zwischen 10 km/h und 40 km/h, insbesondere zwischen 20 km/h und 30 km/h.

Zum Plausibilisieren kann der ermittelte Geschwindigkeitswert mit dem bestimmten Geschwindigkeitswert verglichen werden. Wenn die Differenz zwischen den Geschwindigkeitswerten kleiner als ein Grenzwert ist, gilt der ermittelte Geschwindigkeitswert als plausibel. Dabei ist es möglich, dass der Grenzwert abhängig von der Fahrsituation ist, beispielsweise könnte der Grenzwert bei einer Geradeausfahrt höher sein, da bei einer Geradeausfahrt größere Abweichungen zwischen dem bestimmten Geschwindigkeitswert und dem ermittelten weiteren Geschwindigkeitswert erwartet werden. Es ist ebenfalls denkbar, dass zu mehreren Zeitpunkten jeweils ein weiterer Geschwindigkeitswert ermittelt und ein Geschwindigkeitswert bestimmt wird. In diesem Fall kann beispielsweise ein Mittelwert der Geschwindigkeitswerte verglichen werden.

Darüber hinaus ist es denkbar, dass mittels der Kovarianzmatrix eines Kalmanfilters ein Gütemaß bestimmt wird, wobei das Gütemaß mit einem Grenzwert verglichen wird.

Wenn der ermittelte weitere Geschwindigkeitswert als unplausibel eingestuft wird, kann von einem fehlerhaften Geschwindigkeitssignal des weiteren Geschwindigkeitssensors ausgegangen werden. In diesem Fall können Folgemaßnahmen eingeleitet werden. Beispielsweise kann ein Hinweis angezeigt werden, dass der Geschwindigkeitssensor fehlerhaft ist. Es ist ebenfalls denkbar, dass eine Antriebsunterstützung des Fahrzeugs deaktiviert wird, wenn ein Geschwindigkeitswert als unplausibel eingestuft wird.

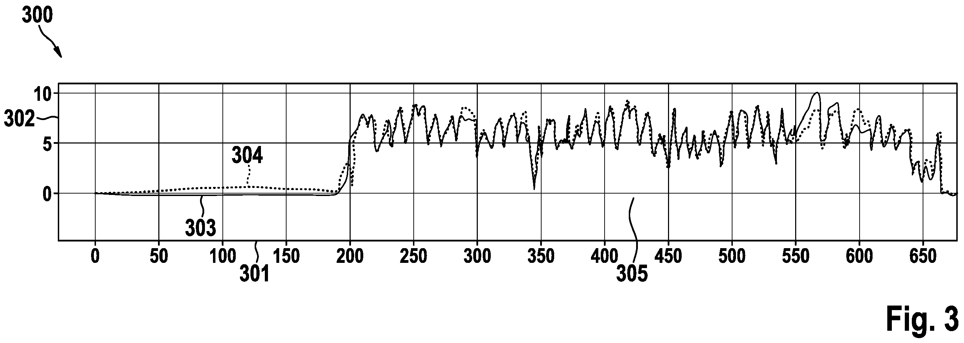

Figur 3 zeigt in schematischer Form einen Verlauf von Geschwindigkeitswerten gemäß einer Ausführungsform der vorliegenden Erfindung.

Das Diagramm 300 zeigt einen Verlauf von Geschwindigkeitswerten. Die X-Achse 301 zeigt die Zeit in Millisekunden und die Y-Achse 302 zeigt die Geschwindigkeit in Metern pro Sekunde. Gezeigt ist der Verlauf von bestimmten Geschwindigkeitswerten 303 und von ermittelten weiteren Geschwindigkeitswerten 304. Durch einen Vergleich der Verläufe 303, 304 kann erkannt werden, ob der Verlauf der ermittelten weiteren Geschwindigkeitswerte 304 plausibel ist. Zum einfacheren Vergleichen könnten die Verläufe der Geschwindigkeitswerte 303, 304 mittels eines Tiefpassfilters gefiltert werden.

Zum Vergleich könnte beispielsweise der gleitende Durchschnitt der Verläufe 303, 304 ermittelt werden. Wenn die gleitenden Durchschnitte eine Abweichung geringer als ein Schwellwert aufweisen, gelten die ermittelten Geschwindigkeitswerte als plausibel.

Es ist ebenfalls denkbar, dass die Fläche 305 zwischen den Verläufen 303, 304 und der X-Achse 301 bestimmt und verglichen wird.

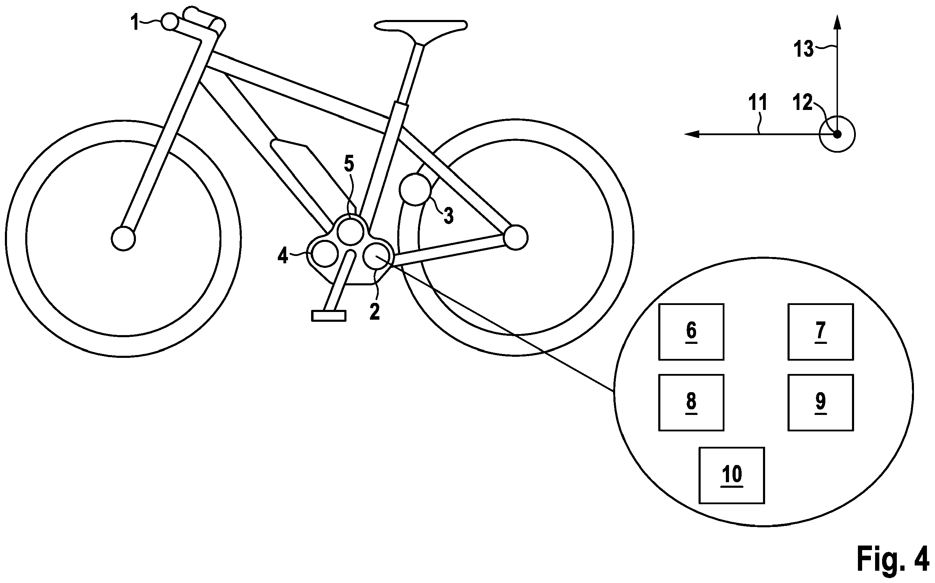

Figur 4 zeigt in schematischer Form ein Fahrzeug gemäß einer Ausführungsform der vorliegenden Erfindung.

Das Fahrzeug 1, hier in Form eines eBikes, umfasst eine Antriebseinheit 2, einen weiteren Geschwindigkeitssensor 3, einen Beschleunigungssensor 4 und einen Drehratensensor 5.

Weiter umfasst das das Fahrzeug 1 eine Messeinheit 6, ausgebildet zum Messen einer Beschleunigung des Fahrzeugs 1 in zumindest drei Richtungen mittels des Beschleunigungs-sensors 4 sowie zum Messen einer Drehrate des Fahrzeugs 1 um zumindest zwei Drehachsen mittels des Drehratensensors 5. Die drei Richtungen sind insbesondere die Fahrtrichtung 11, die Querrichtung 12 und die Hochrichtung 13. Die Drehachsen sind insbesondere parallel zu der Querrichtung 12 und der Hochrichtung 13.

Außerdem umfasst das Fahrzeug 1 eine Ermittlungseinheit 7, ausgebildet zum Ermitteln einer Fahrsituation des Fahrzeugs 1 anhand der gemessenen Beschleunigungen und Drehraten des Fahrzeugs 1, und eine Bestimmungseinheit 8, ausgebildet zum Bestimmen der Geschwindigkeit des Fahrzeugs 1 anhand eines die Kinematik des Fahrzeugs beschreibenden Gleichungssystems, der ermittelten Fahrsituation sowie der gemessenen Beschleunigungen und Drehraten des Fahrzeugs 1.

Das Fahrzeug 1 ist insbesondere ausgebildet, den Geschwindigkeitswert des Fahrzeugs 1 mittels eines Verfahrens gemäß den Schritten S1 bis S4 gemäß Figur 1 zu bestimmen.

Weiter umfasst das Fahrzeug 1 eine zweite Messeinheit 9, die ausgebildet ist die Geschwindigkeit des Fahrzeugs 1 mittels des weiteren Geschwindigkeitssensors 3 zu ermitteln. Zusätzlich ist eine Plausibilisierungseinheit 10 angeordnet, die ausgebildet ist, einen Geschwindigkeitswert des weiteren Geschwindigkeitssensors 3 anhand eines Vergleichs des weiteren Geschwindigkeitswerts und des bestimmten Geschwindigkeitswerts zu plausibilisieren.

Das Fahrzeug 1 ist insbesondere ausgebildet, mittels des weiteren Geschwindigkeitssensors 3 ermittelte Geschwindigkeitswerte anhand eines Verfahrens gemäß den Schritten S5 bis S7 gemäß Figur 2 zu plausibilisieren.

Wenn durch die Plausibilisierungseinheit 10 ein Geschwindigkeitswert des weiteren Geschwindigkeitssensors 3 als nicht plausibel eingestuft wird, kann beispielsweise eine Unterstützung durch die Antriebseinheit 2 reduziert oder ausgesetzt werden.

Insbesondere bei eBikes sind für gewöhnlich Beschleunigungs- 4 und/oder Drehratensensoren 5 per se angeordnet. Mit dem Fahrzeug 1 gemäß Figur 4 kann somit die Geschwindigkeit beziehungsweise der Geschwindigkeitswerts des Fahrzeugs 1 plausibilisiert werden, ohne dass zusätzliche Sensoren angeordnet werden müssen.

Zusammenfassend weist die vorliegende Erfindung zumindest einen der folgenden Vorteile auf und/oder stellt folgende Merkmale bereit:

- Kostengünstige Bestimmung der Geschwindigkeit eines Fahrzeugs,

- Einfaches Plausibilisieren eines impulsbasierten Geschwindigkeitssensors,

- Bereitstellung eines alternativen Verfahrens zur Bestimmung der Geschwindigkeit.

Obwohl die vorliegende Erfindung anhand bevorzugter Ausführungsbeispiele beschrieben wurde, ist sie nicht darauf beschränkt, sondern auf vielfältige Weise modifizierbar.

**Patentansprüche**

1. Verfahren zum Bestimmen eines Geschwindigkeitswerts eines einspurigen Fahrzeugs (1), insbesondere eines eBikes, wobei das Fahrzeug (1) zumindest einen Beschleunigungssensor und einen Drehratensensor aufweist, umfassend die Schritte:

    - Messen (S1) einer Beschleunigung des Fahrzeugs (1) in zumindest drei Richtungen mittels des Beschleunigungssensors,
    - Messen (S2) einer Drehrate des Fahrzeugs (1) um zumindest zwei Drehachsen mittels des Drehratensensors,
    - Ermitteln (S3) einer Fahrsituation des Fahrzeugs (1) anhand der gemessenen Beschleunigungen und Drehraten des Fahrzeugs (1), und
    - Bestimmen (S4) des Geschwindigkeitswerts des Fahrzeugs (1) anhand eines die Kinematik des Fahrzeugs (1) beschreibenden Gleichungssystems, der ermittelten Fahrsituation sowie der gemessenen Beschleunigungen und Drehraten des Fahrzeugs (1).

2. Verfahren gemäß Anspruch 1, wobei die Fahrsituation des Fahrzeugs (1) eine in Fahrtrichtung beschleunigte Geradeausfahrt, eine in Fahrtrichtung unbeschleunigte Geradeausfahrt, eine in Fahrtrichtung beschleunigte Kurvenfahrt, eine in Fahrtrichtung unbeschleunigte Kurvenfahrt oder ein Stillstand ist.

3. Verfahren gemäß Anspruch 2, wobei der Geschwindigkeitswert lediglich während einer Kurvenfahrt bestimmt wird.

4. Verfahren gemäß einem der Ansprüche 1-3, wobei die zumindest drei Richtungen eine Fahrtrichtung (11), eine Querrichtung (12) und/oder eine Hochrichtung (13) des Fahrzeugs (1) sind.

5. Verfahren gemäß Anspruch 4, wobei die zumindest zwei Drehachsen Achsen entlang der Querrichtung und/oder parallel zu der Hochrichtung des Fahrzeugs (1) sind.

6. Verfahren gemäß einem der Ansprüche 1-5, wobei das Gleichungssystem auf der Geschwindigkeit des Fahrzeugs (1) in Abrollrichtung und einer Beschleunigung des Fahrzeugs (1) in Abrollrichtung basiert.

7. Verfahren gemäß einem der Ansprüche 1-6, wobei das Gleichungssystem auf den gemessenen Beschleunigungen und Drehraten, einem Nickwinkel und einem Gierwinkel basiert.

8. Verfahren zum Plausibilisieren eines Geschwindigkeitswerts eines einspurigen Fahrzeugs (1), insbesondere eines eBikes, umfassend die Schritte:

    - Bestimmen (S5) eines Geschwindigkeitswerts des Fahrzeugs (1) anhand eines Verfahrens gemäß einem der Ansprüche 1-7,
    - Ermitteln (S6) eines weiteren Geschwindigkeitswerts des Fahrzeugs (1) anhand eines weiteren Geschwindigkeitssensors (3), und
    - Plausibilisieren (S7) des weiteren Geschwindigkeitswerts anhand eines Vergleichs des bestimmten Geschwindigkeitswerts und des ermittelten weiteren Geschwindigkeitswerts.

9. Verfahren gemäß Anspruch 8, wobei das Plausibilisieren des weiteren Geschwindigkeitswerts anhand eines Zuverlässigkeitsindikators des ermittelten Geschwindigkeitswerts durchgeführt wird.

10. Verfahren gemäß Anspruch 9, wobei der Zuverlässigkeitsindikator auf einem Kalmanfilter, einer Sensitivitätsanalyse und/oder einem Vergleich der gemessenen Beschleunigungen und Drehraten mit einem Grenzwert basiert.

11. Verfahren gemäß einem der Ansprüche 8-10, wobei der Vergleich des bestimmten Geschwindigkeitswerts und des ermittelten weiteren Geschwindigkeitswerts auf einem Mittelwertvergleich, einem Flächengewichtvergleich und/oder einem Schwellwertvergleich mit Fehlerzähler basiert.

12. Einspuriges Fahrzeug (1), insbesondere eBike, umfassend zumindest einen Beschleunigungssensor (4) und einen Drehratensensor (5), sowie:

    - eine Messeinheit (6), ausgebildet zum Messen einer Beschleunigung des Fahrzeugs (1) in zumindest drei Richtungen mittels des Beschleunigungssensors (4) sowie zum Messen einer Drehrate des Fahrzeugs (1) um zumindest zwei Drehachsen mittels des Drehratensensors (5),
    - eine Ermittlungseinheit (7), ausgebildet zum Ermitteln einer Fahrsituation des Fahrzeugs (1) anhand der gemessenen Beschleunigungen und Drehraten des Fahrzeugs (1), und
    - eine Bestimmungseinheit (8), ausgebildet zum Bestimmen eines Geschwindigkeitswerts des Fahrzeugs (1) anhand eines die Kinematik des Fahrzeugs (1) beschreibenden Gleichungssystems, der ermittelten Fahrsituation sowie der gemessenen Beschleunigungen und Drehraten des Fahrzeugs (1).

**Fig. 1**

**Fig. 2**

Fig. 3

Fig. 4

EP 4 474 237 A1

Europäisches
Patentamt

European
Patent Office

Office européen
des brevets

**EUROPÄISCHER RECHERCHENBERICHT**

**Nummer der Anmeldung**

EP 24 17 9853

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2018/284150 A1 (TAKAHASHI GO [JP] ET AL) 4. Oktober 2018 (2018-10-04) * Absätze [0126] - [0130]; Abbildungen 3-4 * | 1-12 | INV. B60W40/105 |
| | - - - - - | | |
| A | DE 10 2021 211388 A1 (BOSCH GMBH ROBERT [DE]) 13. April 2023 (2023-04-13) * Absätze [0001] - [0006], [0017] - [0048] * | 1-12 | |
| | - - - - - | | |
| A | US 10 852 315 B2 (KAWASAKI HEAVY IND LTD [JP]) 1. Dezember 2020 (2020-12-01) * das ganze Dokument * | 1-12 | |
| | - - - - - | | |

**RECHERCHIERTE SACHGEBIETE (IPC)**

B60W

Der vorliegende Recherchenbericht wurde für alle Patentansprüche erstellt

| Recherchenort | Abschlußdatum der Recherche | Prüfer |
|---|---|---|
| München | 21. Oktober 2024 | Stolle, Martin |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 17 9853

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-10-2024

| Im Recherchenbericht angeführtes Patentdokument | Datum der Veröffentlichung | Mitglied(er) der Patentfamilie | Datum der Veröffentlichung |
|---|---|---|---|
| US 2018284150 A1 | 04-10-2018 | EP 3441718 A1 | 13-02-2019 |
| | | JP 6454021 B2 | 16-01-2019 |
| | | JP WO2017175844 A1 | 12-04-2018 |
| | | US 2018284150 A1 | 04-10-2018 |
| | | WO 2017175844 A1 | 12-10-2017 |
| DE 102021211388 A1 | 13-04-2023 | DE 102021211388 A1 | 13-04-2023 |
| | | EP 4163596 A1 | 12-04-2023 |
| | | US 2023110395 A1 | 13-04-2023 |
| US 10852315 B2 | 01-12-2020 | JP 6636294 B2 | 29-01-2020 |
| | | JP 2017065560 A | 06-04-2017 |
| | | US 2017089939 A1 | 30-03-2017 |

EPO FORM P0461

Für nähere Einzelheiten zu diesem Anhang : siehe Amtsblatt des Europäischen Patentamts, Nr.12/82